# FASCICULE DE BREVET EUROPEEN

(11) **EP 0 769 370 B1**
(45) Date de publication et mention de la délivrance du brevet: **04.07.2001**
(21) Numéro de dépôt: 96402176.0
(22) Date de dépôt: 11.10.1996
(51) Int. Cl.: B32B 27/12

(54) **Nouveau stratifié comprenant un non-tissé en association avec un film thermoplastique et procédé de préparation**
Verbundstoff aus einem Vliesstoff mit einer damit verbundenen Kunststoffolie und Verfahren zu seiner Herstellung
Laminate comprising a non-woven fabric in association with a thermoplastic film and process for making it

(30) Priorité: 17.10.1995 FR 9512135
(43) Date de publication de la demande: 23.04.1997
(73) Titulaire: Atofina, 92800 Puteaux (FR)
(72) Inventeur: Degrand, Michel, 27300 Bernay (FR); Chausset, Marie-Noelle, 13117 Lavera (FR)
(74) Mandataire: Pochart, François

(56) Documents cités:
- EP-A- 0 187 725
- EP-A- 0 267 610
- EP-A- 0 474 123
- EP-A- 0 527 447

## Description

La présente invention a pour objet un nouveau stratifié comprenant un non-tissé en association avec un film thermoplastique, et un procédé de préparation.

On connaît les non-tissés depuis de nombreuses années, et leur utilisation n'a cessé de croître. Ainsi, ils sont utilisés dans de nouveaux domaines, tels que les articles sanitaires ou hygiéniques, en contact avec la peau.

EP-A-0 187 725 décrit des stratifiés comprenant une base en un non-tissé et un film thermoplastique. Il y est indiqué que le non-tissé présente, sur la face non couverte par le film qui est en contact avec la peau, un toucher qui s'apparente à celui d'un tissu doux ou soyeux. Ces stratifiés sont utilisés pour la confection par exemple de couches-culottes et autres articles d'hygiène.

Dans ce contexte d'une utilisation avec contact avec la peau, il est souhaitable que le non-tissé présente ses qualités mécaniques traditionnelles, en association avec un toucher et un aspect améliorés. On recherche donc des non-tissés "soyeux".

EP-A-0 527 447 décrit entre autres un non-tissé à base d'un mélange de 50-90% de copolymère (meth)acrylate/acide (meth)acrylique, 5-30% de polyoléfine modifiée et 1-10% de polyetheresteramide. Ces non-tissés présentent des propriétés de stabilité en présence d'urine, présentent une résistance mécanique supérieure et ne collent pas lorsqu'ils sont stockés en bobine. Dans ce document il n'y a aucune mention qu'un tel non-tissé soit "doux" ou "soyeux"; au contraire un polyéthylène doit être rajouté, de façon classique, afin de conférer une certaine souplesse à ce non-tissé.

Par ailleurs, les non-tissés sont aussi largement utilisés en association avec des films thermoplastiques, qui ont des propriétés barrières recherchées dans de nombreux domaines. Ainsi, il est souhaitable que les non-tissés présentent une adhésivité améliorée sur le non-tissé, notamment que l'adhésion du film thermoplastique sur le non-tissé soit aisée.

EP-A-0 187 725 décrit des stratifiés comprenant une couche de base consistant en un non-tissé et un film thermoplastique qui est lié à ce non-tissé. Le film thermoplastique est lié à chaud sur le non-tissé présentant des parties densifiées et non-densifiées de façon à ce que la profondeur de pénétration du film dans ledit non-tissé soit limitée à moins de l'épaisseur totale dudit non-tissé. L'application du film thermoplastique selon ce document est donc difficile et l'adhérence relativement faible.

Par ailleurs, on recherche des stratifiés dont le film thermoplastique présente aussi un aspect et un toucher améliorés.

L'invention permet de résoudre les problèmes précités, à savoir l'invention fournit un nouveau stratifié comprenant un non-tissé avec un aspect et un toucher soyeux, en association avec un film thermoplastique.

Ainsi, l'invention a pour objet un stratifié comprenant :
(a) un non-tissé à base de fibres obtenues à partir d'un mélange de :
   (i) une polyoléfine; et
   (ii) un copolymère comprenant éthylène et acide (méth)acrylique ou un ester d'alkyle de celui-ci ou un sel de celui-ci, et/ou un copolymère comprenant éthylène et acétate de vinyle, les polymères (i) et (ii) étant présents selon un rapport en poids, de 50/50 à 99/1; et
(b) un film thermoplastique contenant :
   (iii) un polymère thermoplastique, et
   (iv) un copolymère comprenant éthylène et acide (méth)acrylique ou un ester d'alkyle de celui-ci ou un sel de celui-ci, et/ou un copolymère comprenant éthylène et acétate de vinyle, le polymère thermoplastique (iii) et le copolymère
   (iv) étant présents selon un rapport, en poids, de 50/50 à 99/1.

De préférence, la polyoléfine (i) des fibres est le polypropylène.

Selon un mode de réalisation, le copolymère (ii) des fibres est choisi dans le groupe consistant en :
- copolymère de l'éthylène et d'acide (méth)acrylique, éventuellement maléisé;
- copolymère de l'éthylène et (méth)acrylate d'alkyle, éventuellement maléisé;
- copolymère de l'éthylène et d'acide (méth)acrylique et d'acétate de vinyle, éventuellement maléisé;
- copolymère de l'éthylène et (méth)acrylate d'alkyle et d'acétate de vinyle, éventuellement maléisé;
- copolymère de l'éthylène, du (méth)acrylate d'alkyle et d'un anhydride d'acide dicarboxylique insaturé tel que l'anhydride maléique ou d'un époxyde insaturé tel que le (meth)acrylate de glycidyle;
- copolymère de l'éthylène, de l'acétate de vinyle et d'un anhydride d'acide dicarboxylique insaturé tel que l'anhydride maléique ou d'un époxyde insaturé tel que le (meth)acrylate de glycidyle; et
- les mélanges des copolymères précités.

Selon un autre mode de réalisation, le copolymère (ii) des fibres est additivé avec un agent anti-bloquant et/ou un agent glissant.

Selon encore un autre mode de réalisation, les polymères (i) et (ii) des fibres sont présents selon un rapport, en poids, de préférence 70/30 à 90/10.

Selon encore un autre mode de réalisation, le film thermoplastique est un film d'un élastomère thermoplastique ayant des blocs polyéther, de préférence un polymère à blocs polyamide et blocs polyéther.

Selon encore un autre mode de réalisation, le copolymère (iv) du film thermoplastique est choisi dans le groupe consistant en :
- copolymère de l'éthylène et d'acide (méth)acrylique, éventuellement maléisé;
- copolymère de l'éthylène et (méth)acrylate d'alkyle, éventuellement maléisé;
- copolymère de l'éthylène et d'acide (méth)acrylique et d'acétate de vinyle, éventuellement maléisé;
- copolymère de l'éthylène et (méth)acrylate d'alkyle et d'acétate de vinyle, éventuellement maléisé;
- copolymère de l'éthylène, du (méth)acrylate d'alkyle et d'un anhydride d'acide dicarboxylique insaturé tel que l'anhydride maléique ou d'un époxyde insaturé tel que le (méth)acrylate de glycidyle;
- copolymère de l'éthylène, de l'acétate de vinyle et d'un anhydride d'acide dicarboxylique insaturé tel que l'anhydride maléique ou d'un époxyde insaturé tel que le (méth)acrylate de glycidyle; et
- les mélanges des copolymères précités;
- éventuellement en mélange avec des polyoléfines éventuellement fonctionnalisées.

Selon encore un autre mode de réalisation, le copolymère (iv) du film thermoplastique est sensiblement identique au copolymère (ii) des fibres.

Selon encore un autre mode de réalisation, le film thermoplastique est additivé avec un agent anti-bloquant et/ou un agent glissant.

Selon encore un autre mode de réalisation, le polymère thermoplastique (iii) et le copolymère (iv) sont présents selon un rapport, en poids, de préférence 70/30 à 90/10.

Selon encore un autre mode de réalisation, le film thermoplastique est lié au non-tissé sans adhésif.

Selon encore un autre mode de réalisation, le non-tissé est obtenu par la technique "spun" ou la combinaison "spun/melt blown".

L'invention a encore pour objet un procédé de préparation d'un stratifié selon l'invention, dans lequel le film thermoplastique (b) est couché ou laminé à chaud sur le non-tissé (a).

Dans la présente demande, le terme "fibre" couvre les fils, les filaments, ce qui est dénommé en anglais "staple fibers" et de façon générale tout matériau obtenu par une opération de filage.

Notamment, ce terme "fibre" couvre le résultat du filage d'un polymère à l'état fondu, à savoir un "thermoplast".

Dans la présente demande, le terme "polyoléfine" désigne les homopolymères ou copolymères d'alpha-oléfines ou de dioléfines.

Ces oléfines sont à titre d'exemple, éthylène, propylène, butène-1, octène-1, butadiène. A titre d'exemple, on peut citer :
- le polyéthylène PE, le polypropylène PP, les copolymères de l'éthylène avec des alpha-oléfines. Ces polymères peuvent être greffés avec des anhydrides d'acides carboxyliques insaturés tel que l'anhydride maléique ou des époxydes insaturés tels que le méthacrylate de glycidyle.
- les copolymères de l'éthylène avec un ou plusieurs produit(s) choisi(s) parmi : (a) les acides carboxyliques insaturés, leurs sels, leurs esters; (b) les esters vinyliques d'acides carboxyliques saturés tel l'acétate de vinyle; (c) les acides dicarboxyliques insaturés, leurs sels, leurs esters, leurs hemiesters, leurs anhydrides; et (d) les époxydes insaturés; la polyoléfine (i) étant différente du copolymère (ii). Le comonomère reste en des proportions relativement faibles, fonction de la nature du comonomère. de façon classique dans l'art, par exemple jusqu'à 2 à 5% en poids. Ces (co)polymères d'éthylène peuvent être greffés par des anhydrides d'acides dicarboxyliques insaturés ou des époxydes insaturés.
- les copolymères blocs à base de styrène, et notamment ceux constitués de séquences polystyrène et polybutadiène (SBS), de séquences polystyrène et polyisoprène (SIS), de séquences polystyrène et poly(éthylène-butylène) (SEBS), ces copolymères étant éventuellement maléisés.
   Les copolymères mentionnés ci-dessus peuvent être copolymérisés de façon statistique ou séquencée et présenter une structure linéaire ou ramifiée. Les homopolymères sont avantageux pour l'utilisation dans la fabrication de non-tissés.
   Ce terme de polyoléfine couvre aussi les mélanges de plusieurs des polyoléfines citées ci-dessus; par exemple l'homopolymère PE ou PP peut être dopé avec du PE ou du PP fonctionnalisé ou dopé avec d'autres (co)polymères fonctionnalisés.
   A titre d'exemple, on peut utiliser :
   le polyéthylène (HDPE, LDPE ou VLDPE);
   les copolymères éthylène/alpha-oléfine;
   les copolymères éthylène/acétate de vinyle (EVA) ;
   les copolymères éthylène/alcool vinylique (EVOH); et
   le polypropylène, qui est la polyoléfine préférée.

Le poids moléculaire des polyoléfines peut varier dans un large mesure, ce que l'homme de l'art appréciera. Par exemple, le poids moléculaire peut être compris entre 1 000 et 1 000 000.

Les caractéristiques de la polyoléfine seront plus particulièrement adaptées pour leur utilisation pour la fabrication de non-tissés, bien que d'autres utilisations soient envisageables. Notamment, les polyoléfines présenteront avantageusement un point de fusion faible, une fluidité élevée (par exemple le melt index à 230°C sous 2,16kg est compris entre 20 et 40), une distribution moléculaire étroite, ne présenteront pas d'infondus et seront des homopolymères.

Dans la présente demande, le terme "copolymère comprenant éthylène et acide (méth)acrylique ou un ester d'alkyle de celui-ci ou un sel de celui-ci, et/ou un copolymère comprenant éthylène et acétate de vinyle" désigne le résultat de la copolymérisation des monomères correspondants. Un ester d'alkyle est un (méth)acrylate d'alkyle. Un sel est un sel de l'acide avec généralement un métal.

A titre de sel, on peut citer notamment les sels qui sont utilisés dans les résines ionomères, par exemple le sel de zinc.

Le groupe alkyle du (méth)acrylate d'alkyle entrant dans le copolymère (ii) et/ou (iv) peut contenir jusqu'à 10 atomes de carbone et peut être linéaire, ramifié ou cyclique. A titre d'illustration du (méth) acrylate d'alkyle, on peut citer notamment l'acrylate de n-butyle, l'acrylate d'isobutyle, l'acrylate d'éthyl-2-hexyle, l'acrylate de cyclohexyle, le méthacrylate de méthyle, le méthacrylate d'éthyle, le méthacrylate de glycidyle. Parmi ces (méth)acrylates, on préfère le méthacrylate de méthyle, l'acrylate d'éthyle, l'acrylate de méthyle et l'acrylate de butyle.

Les copolymères d'éthylène/(méth)acrylate d'alkyle peuvent être terpolymérisés avec un anhydride d'acide carboxylique insaturé tel l'anhydride maléique ou avec un époxyde insaturé tel le (méth)acrylate de glycidyle.

Les copolymères d'éthylène/(méth)acrylate d'alkyle peuvent aussi être greffés avec un anhydride d'acide carboxylique insaturé tel l'anhydride maléique ou avec un époxyde insaturé tel le (méth)acrylate de glycidyle.

Ces copolymères d'éthylène pourraient aussi être mélangés avec d'autres polymères classiquement utilisés en mélange, tels que par exemple des polyoléfines (lorsque ces copolymères sont utilisés dans le film).

A titre d'exemple de tels copolymères, on peut citer
- copolymère de l'éthylène et d'acide (méth)acrylique, éventuellement maléisé;
- copolymère de l'éthylène et (méth)acrylate d'alkyle, éventuellement maléisé;
- copolymère de l'éthylène et d'acide (méth)acrylique et d'acétate de vinyle, éventuellement maléisé;
- copolymère de l'éthylène et (méth)acrylate d'alkyle et d'acétate de vinyle, éventuellement maléisé.

La fonctionnalisation est effectuée tant par terpolymérisation d'anhydride maléique ou de méthacrylate de glycidyle que par greffage avec les mêmes monomères.

On préfère les copolymères EMA et EBA, éventuellement maléisés par terpolymérisation ou greffage.

Les copolymères d'éthylène contiennent le comonomère dans des proportions classiques dans l'art. Par exemple, la teneur en monomère peut varier de 2 à 50%, de préférence de 5 à 40%. De tels copolymères présentent généralement un point de fusion relativement bas, par exemple inférieur à 120°C.

Des mélanges des copolymères précités sont aussi envisagés, tout comme des mélanges de ces copolymères avec des charges classiques.

De tels copolymères sont commercialisés par la société Elf Atochem sous les dénomination de Lotryl® et Lotader®.

Dans la présente demande, l'agent anti-bloquant et/ou l'agent glissant sont utilisés à des teneurs de 0,01 à 2% en poids, de préférence 0,1 à 1,5% en poids par rapport au copolymère d'éthylène.

Ces agents sont choisis par exemple parmi les charges minérales, les amides et éthylène-bis amides d'acide gras insaturés ayant au moins 8 atomes de carbone. A titre d'illustration de tels agents, on peut citer la silice, le talc, le stéarate de zinc, les amides stéarique, palmitique, érucique, myristique, béhénique, l'éthylène-bis-oléamide, éthylène-bis-érucamide, et l'éthylène-bis-stéaramide. Sont employés de préférence le talc et/ou l'éthylène-bis-stéaramide et/ou l'éthylène-bis-oléamide, par exemple. Cependant, on évitera d'utiliser la silice, le talc et le stérate de zinc dans le mélange pour faire les fibres en procédé spun.

Dans la présente demande, le terme "non-tissé" désigne tout matériau désigné par le terme anglais générique "nonwoven". Une définition de ce que recouvre ce terme, ainsi que des procédés de préparation, est la définition donnée dans la publication "Ullmann, 5th edition, Vol.A17, pp565-587, par Fahrbach, Schaut, Weghmann, et Carl Freudenberg, et intitulé "Nonwoven Fabrics"".

Les non-tissés de l'invention sont préparés selon des techniques classiques décrites dans la publication ci-dessus. Ces non-tissés peuvent être des "spunbonded", ou peuvent être préparés par tout autre procédé, tel que laçage au filage (spun lace) ou enchevêtrement par jets d'eau, liaison chimique, liaison thermique, aiguilletage, soufflage-fusion (melt blown), nappage par flux d'air (air laid) . Des non-tissé composites entrent aussi dans le cadre de l'invention.

Des résultats avantageux sont obtenus avec des non-tissés "spun" ou les composites "spun/melt blown".

Les non-tissés selon l'invention présentent des caractéristiques classiques, par exemple le grammage est compris entre 10 et 30 g/m2, le diamètre des fibres est compris entre 1,5 et 4 dtex, de préférence entre 1,8 et 2,2 dtex.

Les composants (i) et (ii) du présent non-tissé peuvent former des fibres "bi-composant", voir la publication ci-dessus, page 568. Notamment, les fibres peuvent être du type "side-by-side", "core and sheath", "orange", "matrix and fibrils"; par exemple les composants (i) et (ii) peuvent être respectivement le "core" (âme) et le "sheath" (gaine) dans les fibres bi-composant du type "core and sheath".

Dans la présente demande, le terme "film thermoplastique" désigne un film d'épaisseur classique à base de thermoplastique.

L'épaisseur du film est classique et est fonction de l'utilisation finale du stratifié, comme l'appréciera l'homme de l'art. A titre d'exemple, l'épaisseur est comprise entre 10 et 500 *µ* m, par exemple entre 10 et 80 *µ*m, de préférence entre 15 et 35 *µ*m, ou par exemple entre 100 et 500 *µ*m, de préférence entre 150 et 400 *µ*m, en fonction de l'utilisation finale du stratifié.

Le terme "thermoplastique" tel qu'utilisé dans la présente invention correspond à la définition classiquement acceptée par l'homme de l'art.

En particulier, mais de façon non-limitative, on peut se reporter avantageusement à la définition donnée dans la publication "Ullmann, 5th edition, Vol.A26, pp633-664, par Abdou-sabet, Wussow, Ryan, Plummer, Judas et Vermière et intitulé "Thermoplastic Elastomers"".

Le thermoplastique qui peut être utilisé dans la présente invention est tout thermoplastique, par exemple des mélanges de polyoléfines (TPO) type EPR; des vulcanisats (TPV), par exemple EPDM; des polyuréthannes (TPU); des copolyesters, des polymères thermoplastiques à blocs polyéther, en particulier à blocs polyamide et blocs polyéther.

L'élastomère thermoplastique qui conduit à des résultats avantageux peut comprendre des motifs polyéther et des motifs polyester, par exemple des blocs. Ces élastomères thermoplastiques sont connus sous le nom de polyesters élastomères et sont thermoplastiques.

Les polyéthers sont par exemple du polyéthylène glycol, du polypropylène glycol ou du polytétraméthylène glycol. La masse Mn de ces polyéthers peut être comprise entre 250 et 6 000.

Les segments souples des polyesters élastomères sont formés par les motifs polyéthers précédents et au moins un diacide carboxylique tel que par exemple l'acide téréphtalique. Les segments souples peuvent comprendre plusieurs motifs résultant de l'action d'un polyéther sur un diacide.

Les segments rigides des polyesters élastomères comprennent des motifs glycol, propanediol ou butanediol-1,4 et des motifs diacides carboxyliques reliés par des fonctions esters. Les diacides carboxyliques peuvent être les mêmes que les précédents. Les segments rigides peuvent comprendre plusieurs motifs résultant de l'action d'un diol sur un diacide.

Les segments souples et les segments rigides sont attachés par des liaisons esters. De tels polyesters élastomères sont décrits dans les brevets EP-A-0 402 883 et EP-A-0 405 227.

Les élastomères thermoplastiques à motifs polyéthers peuvent aussi être des copolyétherimides ester. Les segments souples sont formés par la réaction de polyéther diamines avec des composés tricarboxyliques ou anhydrides d'acide carboxylique contenant un groupe carboxylique tel que par exemple l'anhydride trimellitique. Les polyéthers diamines ont un poids moléculaire moyen de 600 à 2 000. Ces polyétherdiamines peuvent eux-mêmes être issus de polyéthylène glycol, du polypropylène glycol ou du polytétraméthylène glycol.

Les blocs polyester formant des segments rigides dans des copolyétherimides ester résultent par exemple de la condensation d'au moins un diol avec au moins un diacide carboxylique. Le diol peut être le glycol, le propanediol ou le butanediol. Le diacide peut être l'acide téréphtalique. De tels copolyétherimides ester sont décrits dans les brevets EP-A-0 402 883 et EP-A-0 405 227, incorporés à la présente par référence.

Les élastomères thermoplastiques à blocs polyéther peuvent aussi être des polyétheruréthannes. Ils sont formés par l'enchaînement de trois composants de base : (i) un polyétherdiol tel que par exemple un polyéthylène glycol, un polypropylène glycol ou un polytétraméthylène glycol; la masse moléculaire est de 500 à 6 000; (ii) un diisocyanate tel qu'un MDI ou TDI; et (iii) un diol de faible masse tel que de glycol, le butanediol-1,4 ou le 1,4-phénylène-bis-β-hydroxy éther comme allongeur de chaîne.

Les élastomères thermoplastiques peuvent aussi être des polymères à blocs polyamide et blocs polyéther.

Ces polymères à blocs polyamide et blocs polyéther résultent de la copolycondensation de séquences polyamide à extrémités réactives avec des séquences polyéther à extrémités réactives, telles que, entre autres :
- séquences polyamide à extrémités diamines avec des séquences polyoxyalkylènes à extrémités dicarboxyliques;
- séquences polyamide à extrémités dicarboxyliques avec des séquences polyoxyalkylènes à extrémités diamines obtenues par cyanoéthylation et hydrogénation de séquences polyoxyalkylène alpha-oméga dihydroxylées aliphatiques appelés polyétherdiols;
   -- séquences polyamide à extrémités diamines avec des séquences polyétherdiols, les produits obtenus étant dans ce cas particulier, des polyétheresteramides;

Les séquences polyamide à extrémités dicarboxyliques proviennent, par exemple, de la condensation d'acides alpha-oméga aminocarboxyliques, de lactames ou de combinaisons sensiblement stoechiométriques de diacides carboxyliques et de diamines, en présence d'un diacide carboxylique limitateur de chaîne. Avantageusement, les blocs polyamide sont du PA6 ou du PA12.

Le poids moléculaire moyen Mn des séquences polyamide varie de 300 à 15 000 et de préférence de 600 à 5 000.

Le poids moléculaire moyen en nombre Mn des séquences polyéther est compris entre 10 et 6 000 et de préférence entre 200 et 3 000.

Les polymères à blocs polyamide et blocs polyéther peuvent aussi comprendre des motifs répartis de façon aléatoire. Ces polymères peuvent être préparés par la réaction simultanée du polyéther et des précurseurs des blocs polyamide.

Par exemple, on peut faire réagir du polyétherdiol, un lactame (ou un alpha-oméga aminoacide correspondant) et un diacide limiteur de chaîne en présence d'un peu d'eau. On obtient un polymère ayant essentiellement des blocs polyéthers, des blocs polyamide de longueur très variable, mais aussi les différents réactifs ayant réagi de façon aléatoire qui sont répartis de façon statistique le long de la chaîne polymère.

Ces polymères à blocs polyamide et blocs polyéther qu'ils proviennent de la copolycondensation de séquences polyamide et polyéther préparées auparavant ou d'une réaction en une étape, présentent, par exemple, des duretés Shore D pouvant être comprise entre 20 et 75 et avantageusement entre 30 et 70, et une viscosité intrinsèque comprise entre 0,8 et 2,5 mesurée dans le métacrésol à 25°C pour une concentration initiale de 0,8 g/100 ml.

Que les blocs polyéther dérivent du polyéthylène glycol, du polyoxypropylène glycol ou du polyoxytétraméthylne glycol, ils sont soit utilisés tels quels et copolycondensés avec des blocs polyamide à extrémités carboxyliques, soit ils sont aminés pour être transformés en polyéther diamines et condensés avec des blocs polyamide à extrémités carboxyliques. Ils peuvent être aussi mélangés avec des précurseurs de polyamide et un limiteur de chaîne pour obtenir des polymères à blocs polyamide et blocs polyéther ayant des motifs répartis de façon statistique.

De tels polymères à blocs polyamide et polyéther sont décrits dans les brevets suivants : US-P-4 331 786, US-P-4 115 475, US-P-4 195 015, US-P-4 839 441, US-P-4 864 014, US-P-4 230 838 et US-P-4 332 920.

Le polyéther peut être par exemple un polyéthylène glycol (PEG), un polypropylène glycol (PPG) ou un polytétraméthylène glycol (PTMG, aussi appelé polytétrahydrofurane, PTHF).

Que les blocs polyéther soient dans la chaîne du polymère à blocs polyamide et blocs polyéther sous forme de diols ou de diamines, on les appelle par simplification blocs PEG ou blocs PPG ou blocs PTMG.

On ne sortirait pas du cadre de la présente invention si les blocs polyéther contenaient des motifs différents tels que ceux dérivant de l'éthylène glycol, du propylène glycol ou du tétraméthylène glycol.

De préférence, le polymère à blocs polyamide et blocs polyéther comprend un seul type de bloc polyamide et un seul type de bloc polyéther. On utilise avantageusement des polymères à blocs PA12 et blocs PEG, des polymères à blocs PA12 et blocs PTMG, des polymères à blocs PA6 et blocs PEG, et des polymères à blocs PA6 et PTMG.

On peut aussi utiliser des mélanges de polymères à blocs polyamide et blocs polyéther.

Avantageusement, le polymère à blocs polyamide et blocs polyéther est tel que le polyamide est le constituant majoritaire en poids, c'est-à-dire que la quantité de polyamide qui est sous forme de blocs et celle qui est éventuellement répartie de façon statistique dans la chaîne représente au moins 40% en poids du polymère à blocs polyamide et blocs polyéther. Avantageusement, la quantité de polyamide et la quantité de polyéther sont dans un rapport en poids (polyamide/polyéther) compris entre 1/1 et 3/1.

De tels polymères à blocs polyamide et à blocs polyéther sont commercialisés par la société Elf Atochem sous la dénomination Pebax®.

Le polymère thermoplastique peut aussi contenir d'autres polymères, tels que des polyoléfines, éventuellement fonctionnalisées telles que décrites ci-dessus.

Le film de polymère thermoplastique, notamment le film en polymère à blocs polyamide et blocs polyéther, peut aussi comprendre des agents anti-bloquants et/ou des agents glissants, de la même façon que ci-dessus.

L'addition de copolymère éthylène/(méth)acrylate d'alkyle améliore l'aspect et le toucher du film thermoplastique.

Dans le cadre de la présente invention, deux copolymères d'éthylène sont sensiblement identiques lorsque la teneur en éthylène est semblable dans les deux copolymères d'éthylène et que le comonomère est aussi semblable. Cependant, il est clair que l'invention peut être mise en oeuvre avec des copolymères d'éthylène différents sans que cela ne nuise aux résultats finaux.

Les stratifiés selon la présente invention sont préparés par tout procédé approprié. Par exemple, une couche d'adhésif peut être appliquée sur le non-tissé; un tel adhésif peut être un hot-melt tel que décrit dans EP-A-0 547 798 et EP-A-0 547 799.

Avantageusement, le film thermoplastique est laminé à chaud sur le non-tissé.

Le stratifié selon l'invention peut être préparé par exemple selon le procédé suivant. Dans une première étape, connue en soi, on réalise l'extrusion d'un film thermoplastique à partir d'une extrudeuse possédant une filière à entrefer réglable, qui est alimentée avec un mélange approprié. Dans une seconde étape, le film thermoplastique extrudé, présentant une température au plus égale à 320°C, non encore solidifié est appliqué sur une bande de non-tissé au moyen de deux cylindres entre lesquels sont amenés la bande de non-tissé et le film thermoplastique. Le cylindre en contact direct avec le film peut être refroidi, et porte alors le nom de "chill roll". Dans une troisième étape éventuellement, le stratifié peut être entraîné sur un banc de tirage.

D'autres charges classiques peuvent être incorporées tant dans la fibre que dans le non-tissé que dans le film thermoplastique. De telles charges sont par exemple des agents stabilisants ou des colorants.

On ne sortirait pas du cadre de la présente invention si le stratifié contenait d'autres couches, que ce soit d'autres couches de film thermoplastique, d'autres couches de non-tissé, ou encore d'autres couches de tout autre matériau.

Les non-tissés et les stratifiés selon l'invention peuvent être utilisés dans de nombreux domaines, notamment celui des articles destinés à entrer en contact avec la peau, tels que les articles d'hygiène corporelle jetables, par exemple les couches-culottes.

L'invention est maintenant décrite dans l'exemple suivant, qui n'est pas limitatif de la portée de la présente invention.

### Exemple :

On prépare un mélange de polypropylène et d'un copolymère éthylène/acrylate d'alkyle.

Le polypropylène présente les caractéristiques suivantes : melt index à 230°C sous 2,16 kg d'environ 30;
distribution moléculaire étroite;
homopolymère;
absence d'infondus.

Le premier copolymère d'éthylène présente la composition suivante
éthylène 83%
acrylate de butyle 17%
melt index de 8 à 190°C sous 2,16 kg;
absence d'infondus.

Le second copolymère d'éthylène présente la composition suivante
éthylène 80%
acrylate de méthyle 20%
melt index de 8 à 190°C sous 2,16 kg;
absence d'infondus.

On réalise deux mélanges de polypropylène et de copolymère d'éthylène, selon un rapport en poids de 80/20. Dans l'appareil d'extrusion, on utilise un profil de température et des conditions opératoires semblables à ceux utilisés pour le polypropylène.
Le profil de température est 2200C-220°C-2300C-250°C-245°C;

On obtient des fibres qui présentent un toucher soyeux, et qui conduisent à un non-tissé spun (fil de 1,5 à 4 dtex) ayant une souplesse et un toucher améliorés, tout en améliorant de façon notable l'adhésion d'un film par couchage. En fait, il y a une amélioration du Corck Sheet Textile.

L'adhésion sur un film de Pebax chargé avec les mêmes copolymères d'éthylène se trouve améliorée et facilitée.

## Revendications

1. Stratifié comprenant :
(a) un non-tissé à base de fibres obtenues à partir d'un mélange de :
(i) une polyoléfine; et
(ii) un copolymère comprenant éthylène et acide (méth)acrylique ou un ester d'alkyle de celui-ci ou un sel de celui-ci, et/ou un copolymère comprenant éthylène et acétate de vinyle, les polymères (i) et (ii) étant présents selon un rapport, en poids, de 50/50 à 99/1; et
(b) un film thermoplastique contenant :
(iii) un polymère thermoplastique, et
(iv) un copolymère comprenant éthylène et acide (méth)acrylique ou un ester d'alkyle de celui-ci ou un sel de celui-ci, et/ou un copolymère comprenant éthylène et acétate de vinyle, le polymère thermoplastique (iii) et le copolymère
(iv) étant présents selon un rapport, en poids, de 50/50 à 99/1.

2. Stratifié selon la revendication 1, dans lequel la polyoléfine (i) des fibres est le polypropylène.

3. Stratifié selon la revendication 1 ou 2, dans lequel le copolymère (ii) des fibres est choisi dans le groupe consistant en :
- copolymère de l'éthylène et d'acide (méth)acrylique, éventuellement maléisé;
- copolymère de l'éthylène et (méth)acrylate d'alkyle, éventuellement maléisé;
- copolymère de l'éthylène et d'acide (méth)acrylique et d'acétate de vinyle, éventuellement maléisé;
- copolymère de l'éthylène et (méth)acrylate d'alkyle et d'acétate de vinyle, éventuellement maléisé;
- copolymère de l'éthylène, du (méth)acrylate d'alkyle et d'un anhydride d'acide dicarboxylique insaturé tel que l'anhydride maléique ou d'un époxyde insaturé tel que le (méth)acrylate de glycidyle;
- copolymère de l'éthylène, de l'acétate de vinyle et d'un anhydride d'acide dicarboxylique insaturé tel que l'anhydride maléique ou d'un époxyde insaturé tel que le (méth)acrylate de glycidyle; et
- les mélanges des copolymères précités.

4. Stratifié selon l'une quelconque des revendications 1 à 3, dans lequel le copolymère (ii) des fibres est additivé avec un agent anti-bloquant et/ou un agent glissant.

5. Stratifié selon l'une quelconque des revendications 1 à 4, dans laquelle les polymères (i) et (ii) des fibres sont présents selon un rapport, en poids, de 70/30 à 90/10.

6. Stratifié selon l'une quelconque des revendications 1 à 5, dans lequel le film thermoplastique est un film d'un élastomère thermoplastique ayant des blocs polyéther.

7. Stratifié selon la revendication 6, dans lequel l'élastomère thermoplastique ayant des blocs polyéther est un polymère à blocs polyamide et blocs polyéther.

8. Stratifié selon l'une quelconque des revendications 1 à 7, dans lequel le copolymère (iv) du film thermoplastique est choisi dans le groupe consistant en :
- copolymère de l'éthylène et d'acide (méth)acrylique, éventuellement maléisé;
- copolymère de l'éthylène et (méth)acrylate d'alkyle, éventuellement maléisé;
- copolymère de l'éthylène et d'acide (méth)acrylique et d'acétate de vinyle, éventuellement maléisé;
- copolymère de l'éthylène et (méth)acrylate d'alkyle et d'acétate de vinyle, éventuellement maléisé;
- copolymère de l'éthylène, du (méth)acrylate d'alkyle et d'un anhydride d'acide dicarboxylique insaturé tel que l'anhydride maléique ou d'un époxyde insaturé tel que le (méth)acrylate de glycidyle;
- copolymère de l'éthylène, de l'acétate de vinyle et d'un anhydride d'acide dicarboxylique insaturé tel que l'anhydride maléique ou d'un époxyde insaturé tel que le (meth)acrylate de glycidyle; et
- les mélanges des copolymères précités;
- éventuellement en mélange avec des polyoléfines éventuellement fonctionnalisées.

9. Stratifié selon l'une quelconque des revendications 1 à 8, dans lequel le copolymère (iv) du film thermoplastique est sensiblement identique au copolymère (ii) des fibres.

10. Stratifié selon l'une quelconque des revendications 1 à 9, dans lequel le film thermoplastique est additivé avec un agent anti-bloquant et/ou un agent glissant.

11. Stratifié selon l'une quelconque des revendications 1 à 10, dans lequel le polymère thermoplastique (iii) et le copolymère (iv) sont présents selon un rapport, en poids, de 70/30 à 90/10.

12. Stratifié selon l'une quelconque de revendications 1 à 11, dans lequel le film thermoplastique est lié au non-tissé sans adhésif.

13. Stratifié selon l'une quelconque de revendications 1 à 12, dans lequel le non-tissé est obtenu par la technique "spun" ou "spun/melt blown".

14. Procédé de préparation d'un stratifié selon l'une quelconque des revendications précédentes, dans lequel le film thermoplastique (b) est couché ou laminé à chaud sur le non-tissé (a).

## Patentansprüche

1. Schichtstoff umfassend:
(a) ein Vlies aus Fasern erhalten aus einer Mischung von:
(i) einem Polyolefin;
(ii) einem Copolymer umfassend Ethylen und (Meth)acrylsäure oder eines seiner Alkylester oder eines seiner Salze, und/oder einem Copolymer umfassend Ethylen und Vinylacetat, wobei die Polymere (i) und (ii) in einem Gewichtsverhältnis von 50/50 bis 99/1 vorliegen; und
(b) einen thermoplastischen Film enthaltend:
(iii) ein thermoplastisches Polymer ; und
(iv) ein Copolymer umfassend Ethylen und (Meth)acrylsäure oder eines seiner Alkylester oder eines seiner Salze, und/oder ein Copolymer umfassend Ethylen und Vinylacetat, wobei das thermoplastische Polymer (iii) und das Copolymer (iv) in einem Gewichtsverhältnis von 50/50 bis 99/1 vorliegen.

2. Schichtstoff gemäß Anspruch 1, in dem das Polyolefin (i) der Fasern Polypropylen ist.

3. Schichtstoff gemäß Anspruch 1 oder 2, in dem das Copolymer (ii) der Fasern ausgewählt ist aus der Gruppe bestehend aus :
- Copolymer aus Ethylen und (Meth)acrylsäure, gegebenenfalls maleiert;
- Copolymer aus Ethylen und (Meth)acrylsäurealkylester, gegebenenfalls maleiert;
- Copolymer aus Ethylen, (Meth)acrylsäure und Vinylacetat, gegebenenfalls maleiert;
- Copolymer aus Ethylen, (Meth)acrylsäurealkylester und Vinylacetat, gegebenenfalls maleiert;
- Copolymer aus Ethylen, (Meth)acrylsäurealkylester und einem ungesättigten Dicarboxysäureanhydrid, wie Maleinsäureanhydrid oder einem ungesättigten Epoxyd wie Glycidyl(meth)acrylat;
- Copolymer aus Ethylen, Vinylacetat und einem ungesättigten Dicarboxysäureanhydrid, wie Maleinsäureanhydrid oder einem ungesättigten Epoxyd wie Glycidyl(meth)acrylat; und
- Mischungen der vorgenannten Copolymere.

4. Schichtstoff gemäß mindestens einem der Ansprüche 1 bis 3, in dem das Copolymer (ii) der Fasern mit einem Antiblockmittel und/oder einem Gleitmittel additiviert ist.

5. Schichtstoff gemäß mindestens einem der Ansprüche 1 bis 4, in dem die Polymere (i) und (ii) der Fasern in einem Gewichtsverhältnis von 70/30 bis 90/10 vorliegen.

6. Schichtstoff gemäß mindestens einem der Ansprüche 1 bis 5, in dem der thermoplastische Film ein Film aus thermoplastischem Elastomer mit Polyetherblocks ist.

7. Schichtstoff gemäß Anspruch 6, in dem das thermoplastische Elastomer mit Polyetherblocks ein Polymer mit Polyamid- und Polyetherblocks ist.

8. Schichtstoff gemäß mindestens einem der Ansprüche 1 bis 7, in dem das Copolymer
(iv) des thermoplastischen Films ausgewählt ist aus der Gruppe bestehend aus:
- Copolymer aus Ethylen und (Meth)acrylsäure, gegebenenfalls maleiert;
- Copolymer aus Ethylen und (Meth)acrylsäurealkylester, gegebenenfalls maleiert;
- Copolymer aus Ethylen, (Meth)acrylsäure und Vinylacetat, gegebenenfalls maleiert;
- Copolymer aus Ethylen, (Meth)acrylsäurealkylester und Vinylacetat, gegebenenfalls maleiert;
- Copolymer aus Ethylen, (Meth)acrylsäurealkylester und einem ungesättigten Dicarboxysäureanhydrid, wie Maleinsäureanhydrid oder einem ungesättigten Epoxyd wie Glycidyl(meth)acrylat;
- Copolymer aus Ethylen, Vinylacetat und einem ungesättigten Dicarboxysäureanhydrid, wie Maleinsäureanhydrid oder einem ungesättigten Epoxyd wie Glycidyl(meth)acrylat; und
- Mischungen der vorgenannten Copolymere,
- gegebenenfalls mit den gegebenenfalls funktionalisierten Polyolefinen gemischt.

9. Schichtstoff gemäß mindestens einem der Ansprüche 1 bis 8, in dem das Copolymer (iv) des thermoplastischen Films mit dem Copolymer (ii) der Fasern im wesentlichen identisch ist.

10. Schichtstoff gemäß mindestens einem der Ansprüche 1 bis 9, in dem der thermoplastische Film mit einem Antiblockmittel und/oder einem Gleitmittel additiviert ist.

11. Schichtstoff gemäß mindestens einem der Ansprüche 1 bis 10, in dem das thermoplastische Polymer (iii) und das Copolymer (iv) in einem Gewichtsverhältnis von 70/30 bis 90/10 vorliegen.

12. Schichtstoff gemäß mindestens einem der Ansprüche 1 bis 11, in dem der thermoplastische Film ohne Klebstoff mit dem Vlies verbunden ist.

13. Schichtstoff gemäß mindestens einem der Ansprüche 1 bis 12, in dem das Vlies durch "spun" oder "spun/melt down"-Technologie erhalten wurde.

14. Verfahren zur Herstellung eines Schichtstoffs gemäß mindestens einem der vorgehenden Ansprüche wobei der thermoplastische Film (b) auf das Vlies (a) kaschiert oder warm auflaminiert wird.

## Claims

1. A laminate comprising:
(a) a nonwoven based on fibers obtained from a mixture of:
(i) a polyolefin; and
(ii) a copolymer comprising ethylene and (meth)acrylic acid or an alkyl ester thereof or a salt thereof, and/or a copolymer comprising ethylene and vinyl acetate; and
(b) a thermoplastic film comprising:
(iii) a thermoplastic polymer, and
(iv) a copolymer comprising ethylene and (meth)acrylic acid or an alkyl ester thereof or a salt thereof, and/or a copolymer comprising ethylene and vinyl acetate,
the thermoplastic polymer (iii) and the copolymer (iv) being present in a weight ratio of between 50/50 and 99/1.

2. The laminate according to claim 1, in which the polymer (i) of said fibers is polypropylene.

3. The laminate according to claim 1 or 2, in which the copolymer (ii) of said fibers is selected from the group consisting of:
- copolymer of ethylene and (meth)acrylic acid, optionally functionalized with maleic anhydride;
- copolymer of ethylene with alkyl (meth)acrylate, optionally functionalized with maleic anhydride;
- copolymer of ethylene and (meth)acrylic acid and vinyl acetate, optionally functionalized with maleic anhydride;
- copolymer of ethylene and alkyl (meth)acrylate and vinyl acetate, optionally functionalized with maleic anhydride.
- copolymer of ethylene, alkyl (meth)acrylate and of an unsaturated dicarboxylic acid anhydride such as maleic anhydride or of an unsaturated epoxyde such as glycidyl (meth)acrylate;
- copolymer of ethylene, vinyl acetate and an unsaturated dicarboxylic acid anhydride such as maleic anhydride or of an unsaturated epoxyde such as glycidyl (meth)acrylate; and
- mixtures of the above copolymers.

4. The laminate according to any one of claims 1 to 3, in which an anti-blocking agent and/or slip-enhancing agent is added to said copolymer (ii).

5. The laminate according to any one of claims 1 to 4, in which the polymers (i) and (ii) of the fibers are present in a weight ratio comprised between 70/30 and 90/10.

6. The laminate according to any one of claims 1 to 5, in which said thermoplastic film is a film of a thermoplastic elastomer having polyether blocks.

7. The laminate according to claim 6, in which the thermoplastic elastomer having polyether blocks is a polymer having polyether blocks and polyamide blocks.

8. The laminate according to any one of claims 1 to 7, in which the copolymer (iv) of said thermoplastic film is selected from the group consisting of:
- copolymer of ethylene and (meth)acrylic acid, optionally functionalized with maleic anhydride;
- copolymer of ethylene with alkyl (meth)acrylate, optionally functionalized with maleic anhydride;
- copolymer of ethylene and (meth)acrylic acid and vinyl acetate, optionally functionalized with maleic anhydride;
- copolymer of ethylene and alkyl (meth)acrylate and vinyl acetate, optionally functionalized with maleic anhydride.
- copolymer of ethylene, alkyl (meth)acrylate and of an unsaturated dicarboxylic acid anhydride such as maleic anhydride or of an unsaturated epoxyde such as glycidyl (meth) acrylate;
- copolymer of ethylene, vinyl acetate and an unsaturated dicarboxylic acid anhydride such as maleic anhydride or of an unsaturated epoxyde such as glycidyl (meth)acrylate;
- mixtures of the above copolymers;
- the above copolymers optionally mixed with optionally-functionalized polyolefins.

9. The laminate according to any one of claims 1 to 8, in which the copolymer (iv) of said thermoplastic film is substantially identical to the copolymer (ii) of said fibers.

10. The laminate according to any one of claims 1 to 9, in which an anti-blocking agent and/or slip-enhancing agent is added to said thermoplastic film.

11. The laminate according to any one of claims 1 to 10 in which the thermoplastic polymer (iii) and the copolymer (iv) are present in a weight ratio of between 70/30 and 90/10.

12. The laminate according to any one of claims 1 to 11, in which said thermoplastic film is bonded without the use of adhesive to said nonwoven.

13. The laminate according to any one of claims 1 to 12, in which said nonwoven is obtained by the spun or spun/melt blown technique.

14. A method for preparing a laminate according to any one of the preceding claims, in which said thermoplastic film (b) is layed or hot laminated onto said nonwoven (a).
